# EUROPÄISCHE PATENTSCHRIFT

(11) **EP 1 051 564 B1**
(45) Veröffentlichungstag und Bekanntmachung des Hinweises auf die Patenterteilung: **17.07.2002**
(21) Anmeldenummer: 99904818.4
(22) Anmeldetag: 27.01.1999
(51) Int. Cl.: F01N 3/28, B23K 1/00

(54) **VERFAHREN ZUM HERSTELLEN EINES UMMANTELTEN WABENKÖRPERS**
PROCESS FOR PRODUCING AN ENCASED HONEYCOMBED BODY
PROCEDE DE PRODUCTION D'UN CORPS GAUFRE MUNI D'UNE ENVELOPPE

(30) Priorität: 27.01.1998 DE 19803012; 22.05.1998 DE 19823000
(43) Veröffentlichungstag der Anmeldung: 15.11.2000
(73) Patentinhaber: Emitec Gesellschaft für Emissionstechnologie mbH, 53797 Lohmar (DE)
(72) Erfinder: WIERES, Ludwig, D-51491 Overath (DE); KURTH, Ferdi, D-50939 Köln (DE); SIEPMANN, Uwe, D-51103 Köln (DE); GREWE, Heribert, D-51491 Overath (DE)
(74) Vertreter: Kahlhöfer, Hermann, Dipl.-Phys.
(86) Internationale Anmeldenummer: EP9900528
(87) Internationale Veröffentlichungsnummer: WO9937896

(56) Entgegenhaltungen:
- EP-A- 0 590 596
- WO-A-94/06594
- DE-A- 2 924 592
- US-A- 5 557 847
- US-A- 5 593 646
- PATENT ABSTRACTS OF JAPAN vol. 018, no. 525 (C-1257), 5. Oktober 1994 & JP 06 182223 A (NIPPON STEEL CORP), 5. Juli 1994
- PATENT ABSTRACTS OF JAPAN vol. 095, no. 005, 30. Juni 1995 & JP 07 047285 A (TOYOTA MOTOR CORP), 21. Februar 1995

## Beschreibung

Die vorliegende Erfindung bezieht sich auf ein Verfahren zum Herstellen eines ummantelten Wabenkörpers.

Wabenkörper, die durch Stapeln und/oder Wickeln von Blechlagen, von denen zumindest ein Teil strukturierter Blechlagen sind, sind in unterschiedlichsten Ausgestaltungen bekannt. Wabenkörper aus Blechen werden als sogenannte Trägerkörper für katalytisch wirkende Beschichtungen verwendet. Derartige Trägerkörper mit einer katalytisch wirkenden Beschichtung werden in Abgassysteme eines Kraftfahrzeugs eingesetzt, wodurch der Ausstoß bestimmter Komponenten des Abgases verringert wird. Unterschiedliche Ausgestaltungen einer Anordnung als Katalysator-Trägerkörper sind beispielsweise in der EP-A1-0 245 738 beschrieben.

Die gestapelten und/oder gewickelten Blechlagen werden untereinander wenigstens teilweise verlötet, so daß der Wabenkörper ein monolithischer Körper ist. Der Wabenkörper wird auch mit dem Mantelrohr verlötet, in dem sich der Wabenkörper befindet. Ein Verlöten der Blechlagen untereinander sowie mit dem Mantelrohr geschieht vorzugsweise in einem Lötvorgang. Verfahren zum Beloten einer metallischen Anordnung, enthaltend einen Wabenkörper und ein Mantelrohr, sind beispielsweise durch die WO89/11938, WO94/06594, WO93/25339 und die DE-A1-29 24 592 bekannt.

Aus dem Stand der Technik ist es bekannt, daß der Wabenkörper wenigstens teilweise mit einem Haftmittel versehen wird, an dem ein Lotpulver haftet. Die aus dem Stand der Technik bekannten Verfahren unterscheiden sich hinsichtlich der Verfahrensführung durch die Abfolge der Aufbringung eines Haftmittels eines Lotpulvers während oder nach der Ausbildung des Wabenkörpers. Eine ausführliche Darlegung des Standes der Technik enthält hierzu die WO89/11938.

Die unterschiedlichen Verfahrensführungen bezüglich der Belotung einer Anordnung haben unterschiedliche Vorteile. Angestrebt wird zur wirtschaftlichen Herstellung einer Anordnung jedoch ein Belotungsverfahren, bei dem einerseits ein Lot lediglich in die Bereiche eingebracht wird, in denen eine Lötverbindung entstehen soll, andererseits soll der Belotungsvorgang möglichst schnell und mit einem relativ geringen Aufwand erfolgen.

Wird die Anordnung, die einen in einem Mantelrohr angeordneten Wabenkörper enthält, als Katalysatorträgerkörper in einem Abgassystem verwendet, so unterliegt diese Anordnung einer thermischen Belastung. Der Wabenkörper und das Mantelrohr weisen aufgrund ihrer unterschiedlichen Werkstoffeigenschaften ein unterschiedliches thermisches Dehnungsverhalten auf. Es wird daher angestrebt, daß eine starre Verbindung zwischen dem Wabenkörper und dem Mantelrohr an wenigstens einem Endbereich des Wabenkörpers vermieden wird. Liegen keine starren Verbindungen in den jeweiligen Endbereichen des Wabenkörpers mit dem Mantelrohr vor, so werden thermische Spannungen zwischen dem Mantelrohr und dem Wabenkörper vermieden.

Durch die WO96/26805 ist bereits bekannt, daß thermische Spannungen durch geeignete Verlötung des Wabenkörpers mit dem Mantelrohr vermieden werden können. Nach der WO96/26805 wird vorgeschlagen, daß wenigstens eine Blechlage des Wabenkörpers wenigstens einen sich von wenigstens einer Stirnseite über ein Teil der axialen Länge des Wabenkörpers erstreckenden und den Wabenkörper zumindest teilweise umgebenden glatten Abschnitt aufweist. Der glatte Abschnitt bildet am Umfang des Wabenkörpers eine Außenschicht, die an dem Mantelrohr anliegt. Hierdurch wird erreicht, daß unabhängig vom Belotungsverfahren kein Lot zwischen die Außenschicht und das Mantelrohr gelangt. Das Aufbringen des Lotes kann daher, wie aus dem Stand der Technik bekannt, erfolgen. Die Verbindung des Wabenkörpers mit dem Mantelrohr erfolgt über einen Teil der axialen Länge des Mantelrohres, wobei der glatte Abschnitt sich in der axialen Richtung des Wabenkörpers nur bis zu dem Verbindungsbereich zwischen dem Wabenkörper und dem Mantelrohr erstreckt.

Aufgrund fertigungstechnischer Toleranzen des Mantelrohres und des Wabenkörpers kann jedoch nicht sichergestellt werden, daß kein Lot zwischen die glatte Lage und das Mantelrohr gelangt. Um zu vermeiden, daß die Außenlagen des Wabenkörpers mit dem Mantelrohr verbunden werden, ist bereits bekannt, daß durch entsprechende Masken, die den Randbereich des Wabenkörpers abdecken, der Wabenkörper belotet werden kann. Hierdurch wird eine Verbindung des Außenbereiches der Blechlagen mit dem Mantelrohr vermieden. Insbesondere bei S-förmig gewickelten Wabenkörpern führen solche unverbundenen Randbereiche der Blechlagen während des Betriebs des Katalysatorträgerkörpers in einem Abgassystem dazu, daß diese Endbereiche der Blechlagen zum Schwingen neigen. Durch die Schwingungen der Endbereiche kann es zu einer Zerstörung der katalytisch wirksamen Beschichtung des metallischen Wabenkörpers kommen.

Hiervon ausgehend, liegt der vorliegenden Erfindung die Aufgabe zugrunde, ein Verfahren zum Herstellen eines ummantelten Wabenkörpers, insbesondere eines Katalysator-Trägerkörpers anzugeben, durch welches die vorstehend genannten Nachteile vermieden werden.

Diese Aufgabe wird erfindungsgemäß durch das Verfahren zum Herstellen eines ummantelten Wabenkörpers mit den Merkmalen des Anspruchs 1 gelöst. Vorteilhafte Weiterbildungen und Ausgestaltungen des Verfahrens sind Gegenstand der abhängigen Ansprüche.

Das erfindungsgemäße Verfahren zur Herstellung eines ummantelten Wabenkörpers umfaßt ein Ausbilden eines Wabenkörpers durch Stapeln und/oder Wickeln von Blechlagen von denen zumindest ein Teil strukturierte Blechlagen sind, so daß der Wabenkörper für ein Fluid durchströmbare Kanäle aufweist. In ein bereitgestelltes Mantelrohr wird wenigstens eine Manschette, die einen buchsenförmigen Abstandshalter bildet, eingebracht. Die axiale Erstreckung der Manschette ist kleiner als die axiale Länge des Wabenkörpers und des Mantelrohres, vorzugsweise wird die Manschette im Bereich einer Stirnfläche des Mantelrohres eingebracht. In das so vorbereitete Mantelrohr wird der Wabenkörper eingebracht. Der Wabenkörper überlappt das Mantelrohr und die Manschette. Danach erfolgt eine Ausbildung einer Verbindung zwischen dem Wabenkörper und dem Mantelrohr in einem Abschnitt sowie einer Verbindung zwischen dem Wabenkörper und der Manschette in einem Abschnitt. Es erfolgt auch gegebenenfalls die Ausbildung einer Verbindung zwischen dem Mantelrohr und der Manschette. Durch die Manschette wird vermieden, daß die Endbereiche des Wabenkörpers mit dem Mantelrohr unmittelbar verbunden werden. Dadurch, daß der Wabenkörper mit der Manschette verbunden ist, wird erreicht, daß die Manschette ein Kompensationselement bildet, durch die die unterschiedlichen thermischen Ausdehnungen von Mantelrohr und Wabenkörper kompensiert werden, keine starre Verbindung in dem wenigstens einen Endbereich des Wabenkörpers mit dem Mantelrohr entsteht

Fertigungstechnisch bedingt weist ein Mantelrohr eine gewisse Unrundheit auf. Es bestehen auch Toleranzen hinsichtlich der Schwankungen eines Innendurchmessers des Mantels. Hierdurch bedingt kann es zur Ausbildung eines Spaltes zwischen der Innenwandung des Mantelrohres und der Manschette kommen. Um zu vermeiden, daß in diesen Spalt Lot gelangt, und so eine starre Verbindung zwischen der Manschette und dem Mantelrohr entsteht, wird gemäß einer vorteilhaften Ausbildung des erfindungsgemäßen Verfahrens vorgeschlagen, daß die Manschette gegen die Innenwandung des Mantelrohres gepreßt wird. Hierdurch werden mögliche Fertigungstoleranzen des Mantelrohres und/oder der Manschette kompensiert. Durch den Preßvorgang erfährt der Abstandshalter eine Aufweitung, wenn die Manschette im wesentlichen rohrförmig ausgebildet ist, so daß sich die Manschette an die Innenwandung des Mantelrohres anschmiegt. Zwischen der Manschette und der Innenwandung des Mantelrohres liegt somit kein störender Spalt vor, in den Lot hineingelangen kann.

Die Manschette kann einstückig ausgebildet sein. Vorzugsweise ist sie buchsenförmig ausgebildet, so daß die Manschette sich über den gesamten Umfang der Innenwandung des Mantelrohres erstreckt. Sie kann auch geteilt sein. Ist die Manschette geteilt, so überlappen sich vorzugsweise die Endabschnitte der Manschette, wobei durch das Pressen der Manschette in radialer Richtung gegen die Innenwandung des Mantelrohres auch sichergestellt wird, daß auch in den sich überlappenden Endabschnitten der Manschette kein Lot zwischen die Manschette und das Mantelrohr hineingelangen kann.

Ein Pressen der Manschette kann so stark sein, daß die Manschette unverlierbar mit dem Mantelrohr verbunden wird. Dies hat den Vorteil, daß das Mantelrohr mit dem Abstandshalter leichter handhabbar ist, da der Abstandshalter nicht aus dem Mantelrohr herausfallen kann.

Gemäß einer weiteren vorteilhaften Ausgestaltung des Verfahrens wird vorgeschlagen, daß ein Pressen der Manschette gegen die Innenwandung des Mantelrohres vorzugsweise mittels einer mechanischen Preßeinheit erfolgt. Die Preßeinheit weist vorzugsweise einen Dorn, einen Aufweitdorn, auf, welcher in das Mantelrohr, in welchem die Manschette bereits positioniert ist, einbringbar ist. Durch den Dorn wird die Manschette gegen die Innenwandung des Mantelrohres gepreßt.

Statt eines Aufweitdorns kann die Preßeinheit die zur Pressung der Manschette gegen die Innenwandung des Mantelrohres notwendige Kraft bzw. den notwendigen Druck dadurch aufbringen, daß die Preßeinheit wenigstens zwei radial bewegliche Segmente aufweist, durch die die Manschette gegen die Innenwandung gepreßt wird. Die Segmente können mittels eines geeigneten Stempels radial auswärts bewegt werden. Der Vorteil dieser Verfahrensführung ist, daß eine Preßeinheit für Mantelrohre mit unterschiedlichen Durchmessern verwendbar ist.

Nach einer weiteren vorteilhaften Weiterbildung des erfindungsgemäßen Verfahrens wird vorgeschlagen, daß in das Mantelrohr eine Druckeinheit eingebracht wird, durch die ein Druckmedium im wesentlichen radial auswärts gegen die Manschette gerichtet wird. Durch das Druckmedium wird die Manschette gegen die Innenwandung gepreßt. Der Vorteil dieser Verfahrensführung ist, daß die Manschette im wesentlichen vollflächig mit Druck beaufschlagt wird, so daß diese an die Innenwand des Mantelrohres gepreßt wird.

Zur Vermeidung von Verlusten des Druckmediums wird gemäß einer weiteren vorteilhaften Ausgestaltung des Verfahrens vorgeschlagen, daß zwei umlaufende Dichtungen zur Anlage an die Manschette gebracht werden. Die Dichtungen sind zueinander beabstandet angeordnet. Der Abstand der Dichtungen entspricht höchstens einer Breite der Manschette. Vorzugsweise handelt es sich bei den Dichtungen um O-Ringdichtungen. Zwischen den Dichtungen ist wenigstens eine Austrittsöffnung für das Druckmedium vorgesehen.

Vorzugsweise wird das Mantelrohr mit der im Mantelrohr angeordneten Manschette mittels eines Gases unter Innendruck gesetzt. Bei dem Gas handelt es sich vorzugsweise um Luft.

Gemäß einer noch weiteren vorteilhaften Ausbildung des Verfahrens wird vorgeschlagen, daß es sich bei dem Druckmedium um eine Flüssigkeit, insbesondere um Wasser, handelt.

Durch geeignete Überwachung des Innendrucks bzw. des Drucks des Druckmediums kann auch überprüft werden, ob das Mantelrohr dicht ist.

Durch das Pressen der Manschette gegen die Innenwand des Mantelrohres wird auch eine Kalibrierung des Durchmessers des Mantelrohres erreicht. Dies hat auch den Vorteil, daß mögliche Fertigungstoleranzen des Mantelrohres behoben werden, so daß das Mantelrohr mit benachbarten Komponenten eines Abgassystems leichter verbunden werden kann.

Gemäß einer weiteren vorteilhaften Ausgestaltung des Verfahrens wird vorgeschlagen, daß die Manschette mit dem Mantelrohr verbunden wird. Die Ausbildung einer Verbindung zwischen der Manschette und dem Mantelrohr hat den Vorteil, daß beim Einbringen des Wabenkörpers in das Mantelrohr und in die Manschette, diese eine vorgegebene Stellung innerhalb des Mantelrohrs beibehält, obwohl der Wabenkörper, der in axialer Richtung des Mantelrohres und somit auch der Manschette gedrückt wird und hierdurch eine Kraft auf die Manschette in Einführrichtung des Wabenkörpers ausübt.

Vorzugsweise wird die Manschette mit dem Mantelrohr stofflich verbunden. Hierbei handelt es sich vorzugsweise um eine Schweißverbindung. Die Manschette kann punktuell durch Schweißpunkte mit dem Mantelrohr verbunden sein. Es können auch einzelne im wesentlichen umlaufende Schweißnähte ausgebildet sein.

Um die Manschette innerhalb des Mantelrohres zu fixieren, wird vorgeschlagen, daß der Abstandshalter mittels eines Haftmittels mit dem Mantelrohr verbunden wird. Das Haftmittel kann abschnittsweise zwischen die Manschette und dem Mantelrohr eingebracht werden. Vorzugsweise wird das Haftmittel über den gesamten Umfang der Manschette eingebracht. Vorzugsweise handelt es sich bei dem Haftmittel um einen Kleber oder um Öl. Dadurch, daß die Manschette gegen die Innenwand des Mantelrohres gepreßt wird, können auch Kleber verwendet werden, die ihre Haftfähigkeit erst unter erhöhtem Druck erreichen.

Alternativ oder zusätzlich kann die Manschette mit dem Mantelrohr verklebt sein. Die Verbindung zwischen der Manschette und dem Mantelrohr ist vorzugsweise so ausgestaltet, daß die Festigkeit der Verbindung kleiner ist als die Festigkeit einer Verbindung zwischen der Manschette und dem Wabenkörper. Insbesondere bei einer Klebeverbindung zwischen der Manschette und dem Mantelrohr kann diese beispielsweise während eines Lötprozesses aufgrund der beim Lötprozeß vorherrschenden Temperaturen aufgehoben werden.

Dadurch, daß die Verbindung zwischen der Manschette und dem Mantelrohr eine geringe Festigkeit aufweist als die Verbindung zwischen der Manschette und dem Wabenkörper wird auch sichergestellt, daß thermische Spannungen zwischen dem Mantelrohr und dem Wabenkörper nicht über die Manschette in den Wabenkörper eingeleitet werden.

Vorzugsweise ist die Manschette aus dem gleichen Werkstoff hergestellt, wie der Wabenkörper bzw. das Mantelrohr. Die Verbindung zwischen der Manschette und dem Mantelrohr ist im wesentlichen eine Montageverbindung, durch die sichergestellt werden soll, daß die Manschette während der Montage, d. h. während des Einbringens des Wabenkörpers in das Mantelrohr, seine Lage innerhalb des Mantelrohres nicht verändert.

Die Manschette kann mit dem Mantelrohr verlötet, insbesondere hartgelötet werden. Um einen axialen Teilbereich des Mantelrohres mit der Manschette zu verlöten, können Lotabschnitte vorgesehen sein, die sich nicht zwingend vollumfänglich zwischen der Manschette und dem Mantelrohr erstrecken.

Die Verbindung der einzelnen Blechlagen des Wabenkörpers untereinander sowie die Verbindung des Wabenkörpers mit dem Mantelrohr erfolgt vorzugsweise durch einen Lötvorgang. Zur Belotung der durch den Wabenkörper und das Mantelrohr gebildeten Anordnung wird gemäß einer weiteren vorteilhaften Ausgestaltung des Verfahrens vorgeschlagen, daß zunächst wenigstens eine Stirnseite des Wabenkörpers mit einer ein Haftmittel enthaltenden Walze, die um eine Walzenachse drehbar ist, in Kontakt gebracht wird.

Der Wabenkörper und die Walze werden so relativ zueinander bewegt, daß die Walze auf wenigstens einem Teil der Stirnfläche des Wabenkörpers rollt und während des Rollvorgangs ein Haftmittel an den Wabenkörper abgibt. Danach wird ein Lot wenigstens in den Wabenkörper eingebracht.

Durch diese vorteilhafte Verfahrensführung wird eine gleichmäßige Aufbringung eines Haftmittels auf bzw. in den Wabenkörper erreicht. Mögliche Unebenheiten in der Stirnfläche des Wabenkörpers, die aus einem Versatz zwischen Blechlagen des Wabenkörpers herrühren, beeinträchtigen die Aufbringung des Haftmittels nicht. Dadurch, daß die Walze auf der Stirnfläche rollt, wird auch der Verschleiß der Walze verringert, da nicht stets diegleichen Stellen der Walze in Kontakt mit den relativ dünnen Rändern der Blechlagen kommen. Hierdurch wird auch die Lebensdauer einer Einrichtung, die zur Durchführung des Verfahrens geeignet ist, verlängert.

Zum Aufbringen des Haftmittels kann der Wabenkörper und die Walze bewegt werden. Hierdurch wird ein schnelles Auftragen eines Haftmittels erreicht, wenn die Walze und der Wabenkörper translatorisch in entgegengesetzer Richtung bewegt werden. Zur Vereinfachung des Verfahrens wird vorgeschlagen, daß entweder der Wabenkörper oder die Walze ortsfest positioniert ist und die Walze bzw. der Wabenkörper bewegt werden.

Bei einem Wabenkörper, der wenigstens einen aus dem Mantelrohr vorstehenden bezüglich einer Längsachse des Wabenkörpers rotationssymmetrisch ausgebildeten Endbereich aufweist, wird vorgeschlagen, daß der Wabenkörper um seine Längsachse und die Walze, die eine an den Endbereich angepaßte Gestalt aufweist und sich radial einwärts lediglich bis zur Längsachse erstreckt, um eine die Längsachse unter einem Winkel von ca. 90° schneidende Walzenachse verdreht werden. Durch diese Verfahrensführung wird die Walze mit der Fläche des vorstehenden Endbereichs in Kontakt gebracht.

Ein Wabenkörper kann mit seiner Stirnfläche mehrmals in Kontakt mit der Walze gebracht werden. Es ist zweckmäßig, wenn der Wabenkörper vor einem erneuten In-Kontakt-Bringen mit der Walze um einen vorgegebenen Winkel um die Längsachse verschwenkt wird. Hierdurch überstreicht die Walze die Stirnfläche des Wabenkörpers mehrmals, so daß eine sehr gleichmäßige Auftragung eines Haftmittels erzielt wird.

Für bestimmte Anwendungsfälle ist es nicht notwendig, daß sämtliche Blechlagen des Wabenkörpers mit einem Haftmittel versehen werden. Um ein Haftmittel lediglich bereichsweise auf die Stirnfläche des Wabenkörpers aufzubringen, wird vorgeschlagen, daß die Walze lediglich bereichsweise das Haftmittel aufweist. Dies kann beispielsweise durch entsprechende Ausgestaltung der Walze erfolgen. Durch diese Verfahrensführung ist eine Zwischenschaltung von beispielsweise Beleimungsmasken nicht notwendig.

Nach einer noch weiteren vorteilhaften Ausbildung des erfindungsgemäßen Verfahrens wird vorgeschlagen, daß der Wabenkörper im wesentlichen vertikal angeordnet und die Walze mit einer oberen Stirnfläche des Wabenkörpers in Kontakt gebracht wird. Durch die Relativbewegung zwischen dem Wabenkörper und der Walze wird erreicht, daß ein Hineintropfen des Haftmittels in den Wabenkörper nicht eintritt.

Insbesondere bei der Verwendung niedrigviskoser Haftmittel ist es zweckmäßig, den Wabenkörper im wesentlichen vertikal anzuordnen und die Walze mit einer unteren Stirnfläche des Wabenkörpers in Kontakt zu bringen, wodurch ein Hineintropfen des Haftmittels in den Wabenkörper vermieden wird.

Nach noch einer weiteren vorteilhaften Ausgestaltung des Verfahrens wird vorgeschlagen, daß ein Wabenkörper, der zwei gegenüberliegende Stirnflächen aufweist, zwischen zwei beabstandet, drehbar gelagerten Walzen hindurchgeführt wird, so daß die beiden Stirnflächen im wesentlichen gleichzeitig mit einem Haftmittel benetzt werden.

Eine Anordnung, die einen in einem Mantelrohr angeordneten Wabenkörper umfaßt, kann auch so ausgebildet sein, daß das Mantelrohr wenigstens in einem Randabschnitt über den Wabenkörper vorsteht. Mit anderen Worten, der Wabenkörper ist in dem Mantelrohr so angeordnet, daß wenigstens eine Stirnfläche des Wabenkörpers mit Abstand zur benachbarten Stirnfläche des Mantelrohres liegt.

Solche vorstehenden Randabschnitte des Mantelrohres bilden Verbindungsbereiche, so daß die Anordnung mit weiteren Bauteilen oder Elementen verbindbar ist. So kann beispielsweise bei der Verwendung einer solchen Anordnung in einem Abgassystem an dem einen Verbindungsbereich des Mantelrohres ein Diffusor vorgesehen sein, der beispielsweise mit einer Abgasleitung eines Abgassystems einer Verbrennungskraftmaschine verbunden ist. Es ist auch bekannt, daß das Mantelrohr zwei Verbindungsbereiche aufweist, die an dem jeweiligen Ende des Mantelrohres ausgebildet sind, wobei in diesen Verbindungsbereichen im wesentlichen kein Wabenkörper liegt.

Wird beispielsweise das aus der DE-29 24 592 A1 bekannte Verfahren zur Verbindung des Wabenkörpers mit dem Mantelrohr angewandt, bei dem der Wabenkörper mit dem Mantelrohr in ein Tauchbad enthaltend eine Haftflüssigkeit eingetaucht und anschließend mit pulverförmigen Lot versehen, so werden auch die Verbindungsbereiche des Mantelrohres belotet, ohne daß dies notwendig oder gewünscht ist. Die Verbindungsbereiche werden nicht nur auf einer Innenfläche des Mantelrohres sondern auch auf einer Außenfläche des Mantelrohres mit dem Haftmittel versehen. Dies ist unerwünscht, da es hierdurch zu einer Verschleppung des Haftmittels kommt. Insbesondere werden auch die Handhabungsgeräte, die an einer Außenfläche des Mantelrohres greifen, mit dem Haftmittel in Kontakt gebracht. Ein erheblicher Reinigungsaufwand des Handhabungsgerätes ist gegebenenfalls notwendig.

Die weiteren in der DE-29 24 592 A1 beschriebenen Verfahren sind grundsätzlich dazu geeignet, eine Belotung eines Mantelrohres und eines Wabenkörpers zu erreichen, wobei diese Belotungsverfahren relativ aufwendig sind.

Zur Belotung eines Wabenkörpers in einem Mantelrohr wird in einer weiteren vorteilhaften Ausgestaltung des Verfahrens vorgeschlagen, daß zunächst ein Wabenkörper durch Stapeln und/oder Wickeln von Blechlagen, von denen zumindest ein Teil strukturierte Blechlagen sind, so ausgebildet wird, daß dieser für ein Fluid durchströmbare Kanäle aufweist. Der Wabenkörper wird teilweise in das Mantelrohr eingebracht. Der aus dem Mantelrohr vorstehende Abschnitt des Wabenkörpers wird stirnseitig in Kontakt mit der ein Haftmittel enthaltenden Walze gebracht. Danach wird der Wabenkörper in das Mantelrohr eingebracht und ein Lot in den Wabenkörper eingebracht.

Dadurch, daß lediglich der aus dem Mantelrohr vorstehende Abschnitt des Wabenkörpers mit einem Haftmittel in Kontakt gebracht wird, wird vermieden, daß auch das Mantelrohr mit dem Haftmittel in Kontakt kommt. Hierdurch wird erreicht, daß das Mantelrohr haftmittelfrei ist, wodurch das Lotpulver nicht am Mantelrohr anhaftet.

Da das Mantelrohr nicht mit einem Haftmittel versehen wird, ist es auch nicht notwendig, dieses Mantelrohr gegebenenfalls vom Haftmittel zu befreien, um eine Verschleppung des Haftmittels zu vermeiden.

Dadurch, daß der aus dem Mantelrohr vorstehende Abschnitt mit einem Haftmittel in Kontakt gebracht wird, wodurch der Wabenkörper wenigstens teilweise in seiner axialen Richtung mit dem Haftmittel versehen wird, wird auch erreicht, daß der Wabenkörper über seine gesamte Querschnittsfläche mit dem Haftmittel versehen wird, so daß auch Randbereiche des Wabenkörpers einwandfrei mit einem Lotpulver versehen werden können. Hierdurch wird gewährleistet, daß auch im Randbereich des Wabenkörpers bzw. zwischen dem Wabenkörper und der Manschette eine zuverlässige Lötverbindung ausgebildet werden kann.

Nach einer noch weiteren vorteilhaften Ausgestaltung des Verfahrens wird vorgeschlagen, daß vor dem Einbringen des Lotes ein dem Abschnitt gegenüberliegender Abschnitt des Wabenkörpers mit einem Haftmittel in Kontakt gebracht wird. Insbesondere bei einer Anordnung, die ein Mantelrohr aufweist, wobei das Mantelrohr an den gegenüberliegenden Endabschnitten jeweils einen Verbindungsbereich aufweist, wird vorgeschlagen, daß der Wabenkörper durch das Mantelrohr hindurchgeschoben wird, so daß ein Abschnitt aus dem Mantelrohr vorsteht. Dieser Abschnitt wird mit dem Haftmittel in Kontakt gebracht. Danach wird der Wabenkörper so in das Mantelrohr eingebracht, daß der Wabenkörper im wesentlichen nicht in den Verbindungsbereichen des Mantelrohres liegt.

Für eine stabile Handhabung der Anordnung wird vorgeschlagen, daß der Wabenkörper so in das Mantelrohr eingebracht wird, daß dieser während der eine oder der andere Abschnitt mit dem Haftmittel in Kontakt gebracht wird, sich über einen wesentlichen Teil seiner axialen Länge im Mantelrohr befindet. Hierdurch weist die Anordnung einen günstig gelegenen Schwerpunkt auf, der ein Umkippen der Anordnung verhindert.

Insbesondere wird vorgeschlagen, daß der Wabenkörper so in das Mantelrohr eingebracht wird, daß dieser wenigstens 1 mm, vorzugsweise 5 mm, aus dem Mantelrohr vorsteht. Diese Erstreckung ist ausreichend um zu verhindern, daß auch das Mantelrohr mit dem Haftmittel in Kontakt kommt.

Nach einer weiteren vorteilhaften Ausgestaltung des Verfahrens wird vorgeschlagen, daß der mit einem Haftmittel zu benetzende Abschnitt mit einer Aufbringeinrichtung, die das Haftmittel enthält, in Kontakt gebracht wird, wobei die Aufbringeinrichtung eine Benetzungsfläche aufweist, die größer ist als eine Stirnfläche des Abschnitts und diese vollständig überlappt. Durch diese vorteilhafte Weiterbildung des Verfahrens wird erreicht, daß der Abschnitt des Wabenkörpers über seine gesamte Querschnittsfläche mit einem Haftmittel in Kontakt gebracht werden kann. Der Vorteil dieser Verfahrensführung ist auch darin zu sehen, daß zur Benetzung von Wabenkörpern, die unterschiedliche Querschnittsflächen aufweisen, die gleiche Aufbringeinrichtung verwendet werden kann. Es ist daher nicht notwendig, die Aufbringeinrichtung an unterschiedliche Querschnittsgeometrien von Wabenkörpern anzupassen.

Vorteilhafterweise wird die Anordnung im wesentlichen in einer vertikalen Lage, d.h. die Längsachse des Wabenkörpers verläuft im wesentlichen vertikal, mit dem Haftmittel in Kontakt gebracht. Die Aufbringeinrichtung kann für die Kontaktierung des Abschnitts des Wabenkörpers unterhalb des Wabenkörpers angeordnet sein. Bevorzugt wird eine Verfahrensführung, bei der die Aufbringeinrichtung oberhalb des Mantelrohres angeordnet ist und der Abschnitt mit der Aufbringeinrichtung in Kontakt gebracht wird.

Bei solch einer Anordnung der Aufbringeinrichtung fließt das Haftmittel auch aufgrund der Schwerkraft in den Abschnitt hinein. In Abhängigkeit von der Kontaktzeit des Abschnittes mit der Aufbringeinrichtung und/oder von der Verweilzeit des Wabenkörpers in dieser vertikalen Position kann auch erreicht werden, daß das Haftmittel über die gesamte axiale Länge des Wabenkörpers oder über einen Teil der axialen Länge des Wabenkörpers in diesen eingebracht wird. Um den Wabenkörper in für eine Lötverbindung relevanten Bereichen mit einem Haftmittel über seine gesamte axiale Länge zu versehen, ist es nicht notwendig, daß dieser entsprechend lange an der Aufbringeinrichtung verweilt. Es ist ausreichend, wenn der Abschnitt solange mit der Aufbringeinrichtung, insbesondere mit dem Haftmittel, in Kontakt verbleibt, bis hinreichend viel Haftmittel in die einzelnen Kanäle des Wabenkörpers gelangt, so daß eine hinreichende Benetzung der für die Ausbildung einer Lötverbindung relevanten Bereiche mit dem Haftmittel erfolgt. Durch diese Verfahrensführung ist es auch nicht mehr notwendig, den Wabenkörper beidseitig mit einem Haftmittel in Kontakt zu bringen. Insbesondere kann die Zeit, die für einen Transport der Anordnung von einer Benetzungsstation, in der das Haftmittel in den Wabenkörper eingebracht wird, zu einer Belotungsstation, in der ein Lotpulver in den Wabenkörper eingebracht wird, notwendig ist, für einen selbsttätigen Transport des Haftmittels innerhalb des Wabenkörpers genutzt werden, wenn dieser in seiner vertikalen Stellung transportiert wird.

Insbesondere bei der Aufbringung eines Haftmittels mittels einer oberhalb des Wabenkörpers angeordneten Aufbringeinrichtung ist es zweckmäßig, wenn der Haftmittelträger im wesentlichen elastisch und saugfähig ausgebildet ist. Wird beispielsweise der Abschnitt gegen den Haftmittelträger, der das Haftmittel enthält, gedrückt, so wird erreicht, daß das Haftmittel aus dem Haftmittelträger heraustritt und in den Abschnitt eintritt. Es ist auch möglich, den Haftmittelträger gegen den Abschnitt des Wabenkörpers zu drüken. Alternativ können Anordnung und Haftmittelträger relativ zueinander so bewegt werden, daß diese gegeneinander drücken.

Bei einer seriellen Belotung von Wabenkörpern werden aufeinanderfolgend die einzelnen Wabenkörper mit dem Haftmittelträger in Kontakt gebracht. Werden diese Wabenkörper gegen den Haftmittelträger gedrückt, so besteht die Gefahr, daß der Haftmittelträger aufgrund von Materialermüdungserscheinungen einen Strukturverlust erfährt, der dazu führen kann, daß keine ausreichende Einbringung eines Haftmittels in den Abschnitt erfolgt. Dies kann dazu führen, daß nicht genügend Haftmittel zur Verfügung gestellt wird, an dem ein Lotpulver haften bleibt. Um sicherzustellen, daß ausreichend Haftmittel in den Abschnitt des Wabenkörpers eingebracht werden kann, wird vorgeschlagen, daß sich während eines Kontaktes eines Abschnittes mit dem Haftmittelträger oder mit dem Haftmittel entstehende Kontaktflächen bei wenigstens zwei aufeinanderfolgenden Anordnungen nur teilweise überlappen. Diesem Vorschlag liegt die Überlegung zugrunde, daß der Haftmittelträger nicht an denselben Stellen durch aufeinanderfolgende Anordnungen kontaktiert wird, wodurch der Haftmittelträger wenigstens teilweise nicht an denselben Stellen beansprucht wird, so daß eine Materialermüdung des Haftmittelträgers nicht oder nur sehr verzögert eintreten kann.

Um den Wabenkörper in einem axialen Teilbereich des Mantelrohres und mit dem buchsenförmigen Element zu verlöten wird vorgeschlagen, daß wenigstens ein Lotabschnitt ausgebildet wird, der das Mantelrohr und das Element überlappt. Hierbei handelt es sich vorzugsweise um einen in Umfangsrichtung des Mantelrohres betrachtet, geschlossenen Lotabschnitt.

Weitere Vorteile und Einzelheiten des erfindungsgemäßen Verfahrens werden anhand der in der Zeichnung dargestellten Anordnung erläutert.

Es zeigen:
- Figur 1: im Vollschnitt ein Mantelrohr mit einer Manschette und einem Lotabschnitt,
- Figur 2: vergrößert einen Randbereich einer Anordnung,
- Figur 3: perspektivisch ein Mantelrohr mit einer umlaufenden Manschette,
- Figur 4: ein Mantelrohr mit einer Manschette,
- Figur 5: im Schnitt ein Mantelrohr mit einer Manschette und einem Haftmittel,
- Figur 6: im Schnitt ein Mantelrohr mit einer Druckeinheit,
- Figur 7: im Schnitt eine Anordnung mit einer Walze,
- Figur 8: eine Anordnung zwischen zwei Walzen,
- Figur 9: im Schnitt eine Anordnung mit einem aus dem Mantelrohr vorstehenden Endbereich und einer Walze,
- Figur 10: eine Anordnung während einer Aufbringung eines Haftmittels,
- Figur 11: ein Einbringen des Wabenkörpers in das Mantelrohr nach einer Aufbringung eines Haftmittels,
- Figur 12: ein Aufbringen eines Haftmittels am zweiten Abschnitt des Wabenkörpers,
- Figur 13: Einbringen eines Lotes in den Wabenkörper,
- Figur 14: eine Auftragstation.

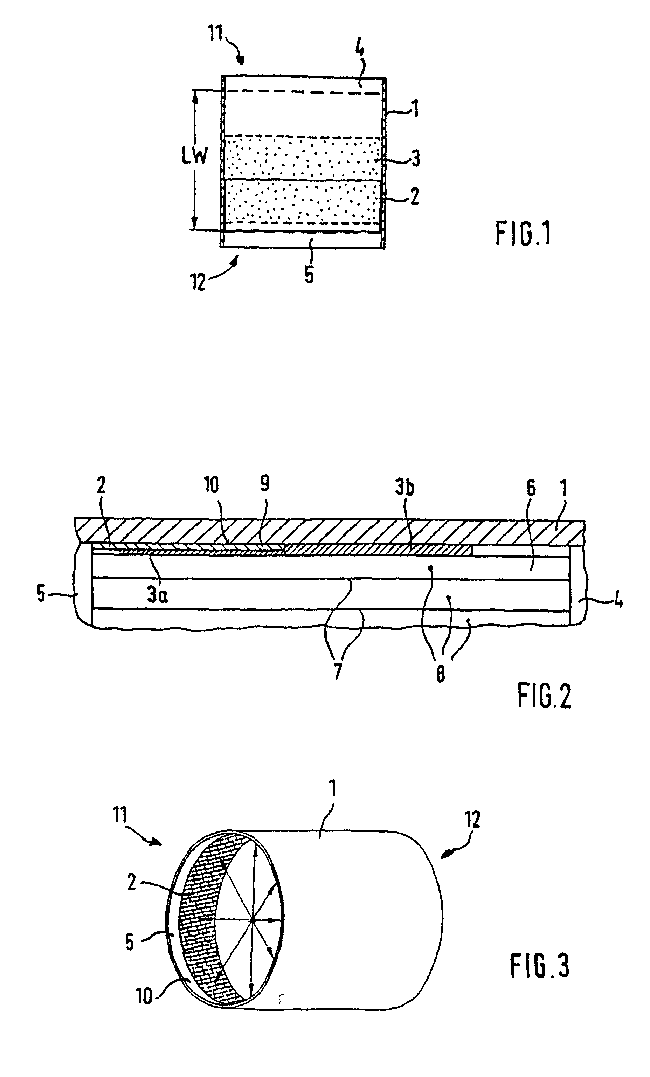

Figur 1 zeigt eine Schnittdarstellung eines Mantelrohres 1. Das Mantelrohr 1 weist vorzugsweise einen im wesentlichen kreisförmigen Querschnitt auf. An den jeweiligen Endabschnitten des in der Figur 1 dargestellten Mantelrohres 1 sind Verbindungsbereiche 4, 5 vorgesehen. Die Verbindungsbereiche 4, 5 sind durch die gestrichelten Linien gekennzeichnet. Diese Verbindungsbereiche 4, 5 dienen der Verbindung der Anordnung mit weiteren Komponenten, die nicht dargestellt sind. Insbesondere kann ein jeder Verbindungsbereich 4, 5 mit einer Komponente eines Abgassystems einer Verbrennungskraftmaschine verbunden werden. Der zwischen den Verbindungsbereichen 4, 5 liegende axiale Abschnitt des Mantelrohres weist eine Länge LW auf, die im wesentlichen der axialen Erstreckung eines Wabenkörpers entspricht.

In dem Mantelrohr 1 ist eine buchsenförmige Manschette 2 eingebracht. Mit dem Bezugszeichen 3 ist ein Lotabschnitt bezeichnet, der teilweise das Mantelrohr 1 und die buchsenförmige Manschette 2 überlappt.

Figur 2 zeigt vergrößert einen Randbereich der Anordnung. In dem Mantelrohr 1 ist ein Wabenkörper 6 eingebracht. Der Wabenkörper 6 ist durch Stapeln und/oder Wickeln von Blechlagen 7, von denen zumindest ein Teil strukturierte Blechlagen sind, gebildet. Der Wabenkörper 6 weist für ein Fluid durchströmbare Kanäle 8 auf.

Die buchsenförmige Manschette 2 weist einen Außenmantel 9 auf, der an einem Teil der Innenwandung 10 des Mantelrohres 1 anliegt. Die Manschette 2 ist in Umfangsrichtung betrachtet ringförmig ausgebildet. Wie aus der Darstellung in Figur 1 und insbesondere nach Figur 2 ersichtlich ist, erstreckt sich die Manschette 2 über einen Teil der axialen Erstreckung des Wabenkörpers 6 und des Mantels 1.

Die Manschette 2 ist mittelbar mit dem Mantelrohr 1 verbunden. Der Lotabschnitt 3 weist einen ersten Abschnitt 3a auf, der im wesentlichen der axialen Erstreckung des Abstandshalters 2 entspricht. An den Lotabschnitt 3a schließt sich ein Lotabschnitt 3b an, der sich in Richtung des Verbindungsbereiches 4 erstreckt.

Durch den Abschnitt 3a des Lotabschnittes 3 besteht eine Lotverbindung zwischen dem Wabenkörper 6 und der Manschette 2. Durch den Lotabschnitt 3b wird der Wabenkörper 6 mit dem Mantelrohr 1 verbunden. Zwischen der Manschette 2 und dem Mantelrohr 1 besteht keine Lotverbindung. Zumindest die axiale Erstreckung der Manschette 2 bildet eine Kompensationsstrecke, durch die unterschiedliche thermische Dehnungen vom Mantelrohr und vom Wabenkörper 6 kompensiert werden können.

Die Manschette 2 kann in Form eines dünnwandigen Rohres in das Mantelrohr 1 eingebracht werden, wie dies die Figur 3 zeigt. Nach dem Einbringen der Manschette 2 in das Mantelrohr wird die Manschette 2 radial auswärts gegen die Innenwandung 10 des Mantelrohres 1 gedrückt, so daß zwischen der Innenwandung 10 des Mantelrohres 1 und der Manschette 2 kein Spalt besteht, in den Lotpulver eindringen kann.

Ein Pressen der Manschette 2 radial auswärts gegen die Innenwandung 10 des Mantelrohres 1 kann beispielsweise dadurch erfolgen, daß die Öffnungen 11, 12 des Mantelrohres 1 verschlossen werden. In das Mantelrohr 1 wird ein Druckmedium eingebracht, welches einen Innendruck in dem Mantelrohr erzeugt, der so hoch ist, daß die Manschette 2 gegen die Innenwandung 10 gepreßt wird.

Die Manschette 2 kann auch mittels einer mit mechanischen Preßeinheit gegen die Innenwandung 10 gepreßt werden. Hierzu weist die Preßeinheit vorzugsweise einen Dom auf, der in das Mantelrohr 1 derart einbringbar ist, daß dieser die Manschette 2 gegen die Innenwandung 10 des Mantelrohres 1 drückt.

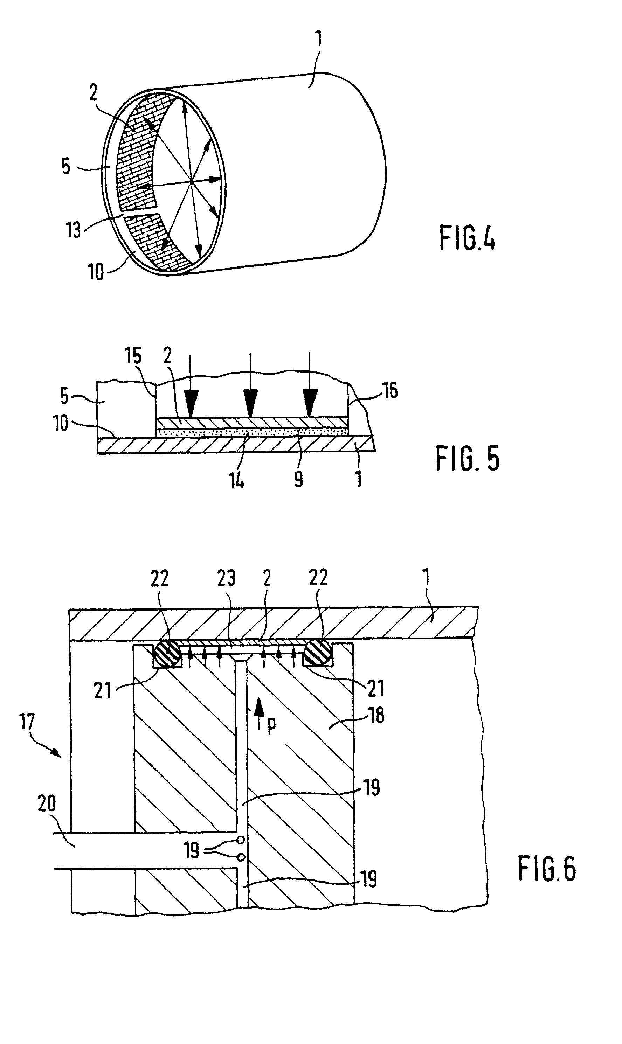

Figur 4 zeigt eine Manschette 2 auf, die durch ein ringförmig gebogenes Band gebildet ist. Die Länge des Umfangs des Bandes ist vorzugsweise so gewählt, daß im angepreßten Zustand der Manschette 2 die Stirnflächen des Bandes aneinander stoßen. Vor dem Pressen der Manschette 2 in radialer Richtung gegen die Innenwandung 10 des Mantelrohres 1 kann zwischen den Stirnflächen des Bandes ein Spalt 13 vorhanden sein, wie dies die Figur 4 zeigt.

Die in den Figuren 3 und 4 dargestellten Pfeile deuten die Preßrichtung und die Preßkraft an, durch die die Manschette 2 an die Innenwandung 10 des Mantelrohres 1 gepreßt wird.

Figur 5 zeigt beispielhaft ein Ausführungsbeispiel einer Anordnung, bei der zwischen der Manschette 2 und der Innenwandung 10 des Mantelrohres 1 ein Haftmittel 14 eingebracht ist. Bei dem Haftmittel 14 kann es sich beispielsweise um einen Kleber oder auch um Öl handeln. Das Haftmittel 14 ist auf dem gesamten Außenmantel 9 der Manschette 2 aufgebracht. Dies ist jedoch nicht zwingend notwendig. Es können auch streifenförmige Haftmittelbereiche auf dem Außenmantel 9 der Manschette 2 vorgesehen sein, wobei die Haftmittelstreifen im Bereich der jeweiligen Stirnfläche 15, 16 der Manschette 2 vorgesehen sind.

Figur 6 zeigt im Schnitt ein Mantelrohr 1, in dem eine Manschette 2 angeordnet ist. In das Mantelrohr 1 ist eine Druckeinheit 17 angeordnet. Die Druckeinheit 17 weist einen Körper 18 auf, der vorzugsweise eine Vielzahl von radial auswärts gerichteten Kanälen 19 aufweist. Die Kanäle 19 sind mit einem Zentralkanal verbunden, die im wesentlichen im Zentrum des Körpers 18 mündet.

In der Mantelfläche des Körpers 18 sind zwei umlaufende Nuten 21 auf Die Nuten sind beabstandet zueinander ausgebildet. In jeder Nut 21 ist jeweils eine Dichtung 22 angeordnet. Bei den Dichtungen 22 handelt es sich beispielsweise um O-Ringdichtungen. Der Abstand der beiden Dichtungen 22 zueinander entspricht im wesentlichen der Breite der Manschette 2. Der Bereich der Mantelfläche des Körpers 18 zwischen den Dichtungen 22 ist so ausgebildet, daß zwischen diesen Mantelbereich und der Manschette 2 ein umlaufender Ringspalt ausgebildet ist.

Ein Druckmedium wird über den Zentralkanal 20 in die Kanäle 19 geleitet. Das Druckmedium strömt in den Ringspalt 23 ein und preßt die Manschette 2 gegen den Mantel 1.

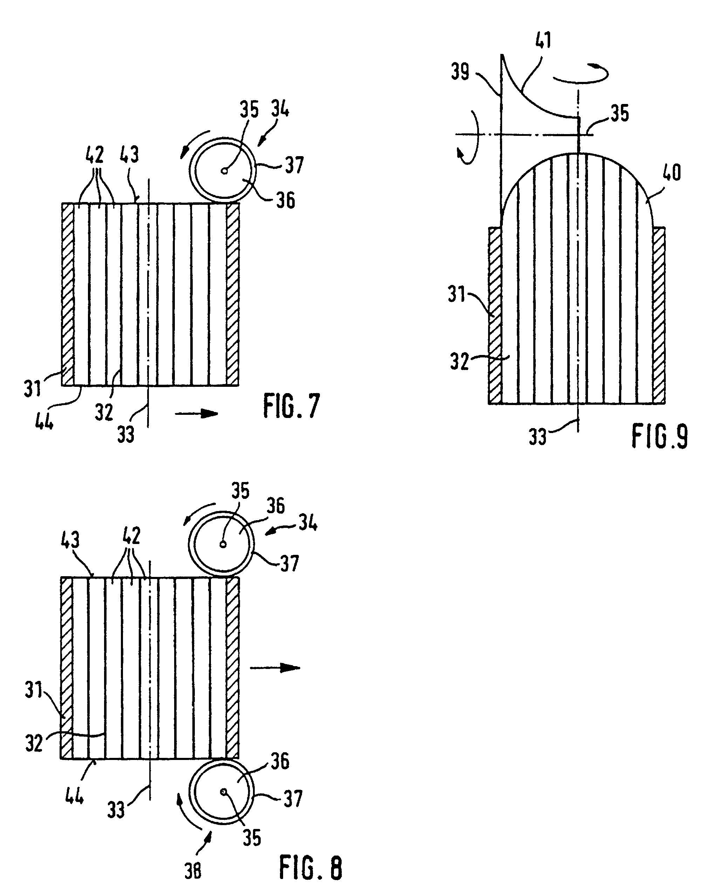

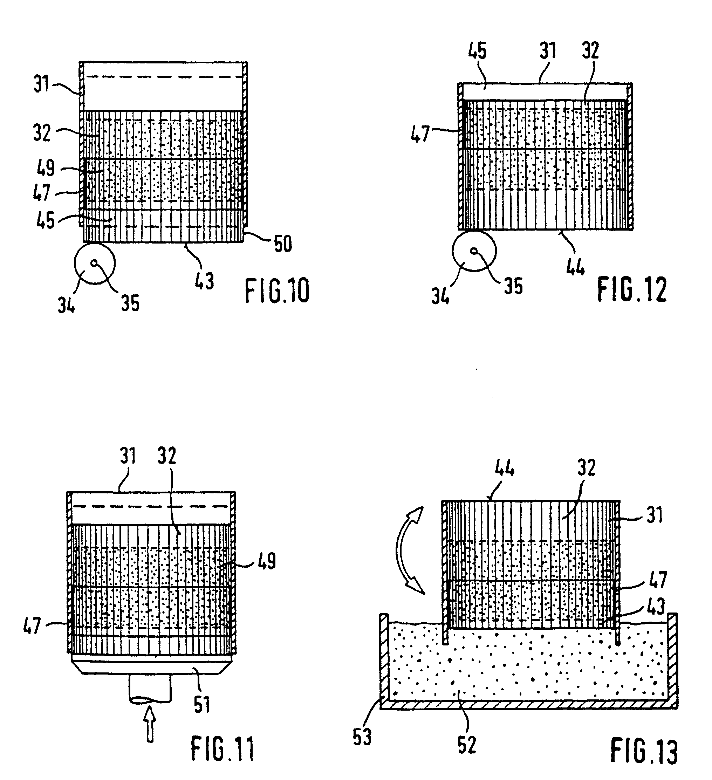

Figur 7 zeigt im Schnitt ein Mantelrohr 31, in dem ein metallischer Wabenkörper 32, der durch Stapeln und/oder Wickeln von Blechlagen, von denen zumindest ein Teil strukturiert sind, gebildet ist. Der Wabenkörper weist sich in Längsrichtung des Wabenkörpers erstreckende Kanäle 42 auf. In der Figur 7 sowie in den Figuren 8 und 9 ist eine Manschette nicht dargestellt.

Der Wabenkörper ist im wesentlichen vertikal angeordnet. Er weist zwei gegenüberliegende Stirnflächen 43, 44 auf.

Das Mantelrohr 31 bildet mit dem Wabenkörper 32 eine Anordnung. Oberhalb der Anordnung ist eine Walze 34 angeordnet. Die Walze 34 ist um eine Walzenachse 35 drehbar gelagert. Die Walze 34 weist einen Kern 36 auf, auf dem ein Substrat 37 ausgebildet ist, der ein nicht dargestelltes Haftmittel enthält.

Die Aufbringung des Haftmittels von der Walze 34 in und auf die Stirnfläche 43 des Wabenkörpers 32 erfolgt durch eine Relativbewegung zwischen dem Wabenkörper 32 und der Walze 34.

Der Wabenkörper 32 wird entsprechend dem Pfeil in der Figur 7 bewegt, wodurch die an der Stirnfläche 43 anliegende Walze 34 in Rotation um ihre Walzenachse 35 versetzt wird. Während dieser Rotation gelangt das Substrat 37 mit dem Haftmittel zur Anlage an die Stirnfläche 43 und das Haftmittel in die Stirnfläche 43 des Wabenkörpers 32 ab.

Die Walze 34 kann auch angetrieben werden. Durch den Anpreßdruck zwischen der Walze 34 und der Anordnung kann die abgegebene Haftmittelmenge gesteuert werden. Dies kann auch durch die Geschwindigkeit der Relativbewegung zwischen dem Wabenkörper 32 und der Walze 34 gesteuert werden.

In der Figur 8 ist eine Anordnung dargestellt, die der in der Figur 7 dargestellten Anordnung entspricht. Die Anordnung ist zwischen zwei Walzen 34, 38 bewegbar, so daß die gegenüberliegenden Stirnflächen 43, 44 gleichzeitig mit einem Haftmittel versehen werden. Die Menge des Haftmittels, die die Walzen 34, 38 abgeben, kann gleich oder verschieden sein. Die Walze 34 bzw. 38 kann auch so ausgebildet sein, daß in axialer Richtung der Walze 34 bzw. 38 betrachtet Abschnitte vorhanden sind, die kein Substrat 37 aufweisen, so daß eine streifenförmige Aufbringung eines Haftmittels möglich ist.

In der Figur 9 ist ein Wabenkörper 32 dargestellt, der in einem Mantelrohr 31 angeordnet ist. Der Wabenkörper 32 weist einen bezüglich der Längsachse 33 im wesentlichen rotationssymmetrisch ausgebildeten Endbereich 40 auf Die Walze 39 weist eine an den Endbereich 40 angepaßte Kontur 41 auf.

Zum Aufbringen eines Haftmittels liegt die Walze 39 an dem Endbereich 40 an. Die Walze 39 ist dabei so angeordnet, daß sich die Walzenachse 35 und die Längsachse 33 unter einem Winkel von ca. 90° schneiden. Der Wabenkörper 32 mit dem Mantel 31 wird um die Achse 33 verdreht, so daß die Walze 39 zur Anlage an die Fläche des Endbereichs 40 gelangt. Alternativ kann die Anordnung umfassend das Mantelrohr 31 und den Wabenkörper 32 auch ortsfest angeordnet sein. In diesem Fall wird die Walze 39 in eine Rotationsbewegung um die Achse 35 sowie um die Längsachse 33 versetzt. Es ist auch möglich sowohl die Anordnung als auch die Walze zu bewegen.

Figur 10 zeigt ein Mantelrohr 31 mit dem eine buchsenförmige Manschette 47 und ein Wabenkörper 32 eingebracht ist. Der Wabenkörper 32 wird so in das Mantelrohr 31 eingebracht, daß ein Abschnitt 50 aus dem Mantelrohr 31 vorsteht. Der Abschnitt 50 des Wabenkörpers 32 wird mit einem nicht dargestellten Haftmittel, insbesondere einer Haftflüssigkeit, in Kontakt gebracht. Die Haftflüssigkeit ist in einer Walze 34 bereitgestellt. Es erfolgt eine Benetzung des Wabenkörpers von der Stirnseite her in axialer Richtung des Wabenkörpers 32. Die Walze 34 ist so ausgestaltet, daß eine Benetzung mit einem Haftmittel über die gesamte Stirnfläche 43 des Wabenkörpers 32 möglich ist.

Erfolgte eine ausreichende Benetzung des Wabenkörpers 32 mit einer Haftflüssigkeit, so wird der Wabenkörper 32 in das Mantelrohr 31 eingebracht. Die Einbringung des Wabenkörpers 32 erfolgt vorzugsweise mittels eines Stempels 51, durch den eine Kraft in axialer Richtung des Mantelrohres 31 auf den Wabenkörper 32 ausgeübt wird. An dem Mantelrohr 31 greift ein entsprechender Gegenhalter an, der nicht dargestellt ist, und durch den das Mantelrohr 31 gehalten wird.

Figur 12 zeigt, daß vor einem Einbringen eines Lotes die der Stirnfläche 43 gegenüberliegende Stirnfläche 44 des Wabenkörpers 32 mit einem Haftmittel in Kontakt gebracht wird. Das Haftmittel wird durch eine Walze 34 bereitgestellt.

Nachdem die Stirnfläche 44 mit dem Haftmittel versehen worden ist, wird ein Lotpulver 52 in den Wabenkörper 32 eingebracht. Der Einbringvorgang des Lotes in den Wabenkörper 32 erfolgt derart, daß der Wabenkörper stirnseitig in das Lotpulver eingedrückt wird. Anschließend wird der Wabenkörper mit dem Mantelrohr 31 gewendet und die gegenüberliegende Stirnfläche in das Lotpulver 52 eingedrückt. Das Lotpulver 52 ist in einem Behälter 53 bereitgestellt.

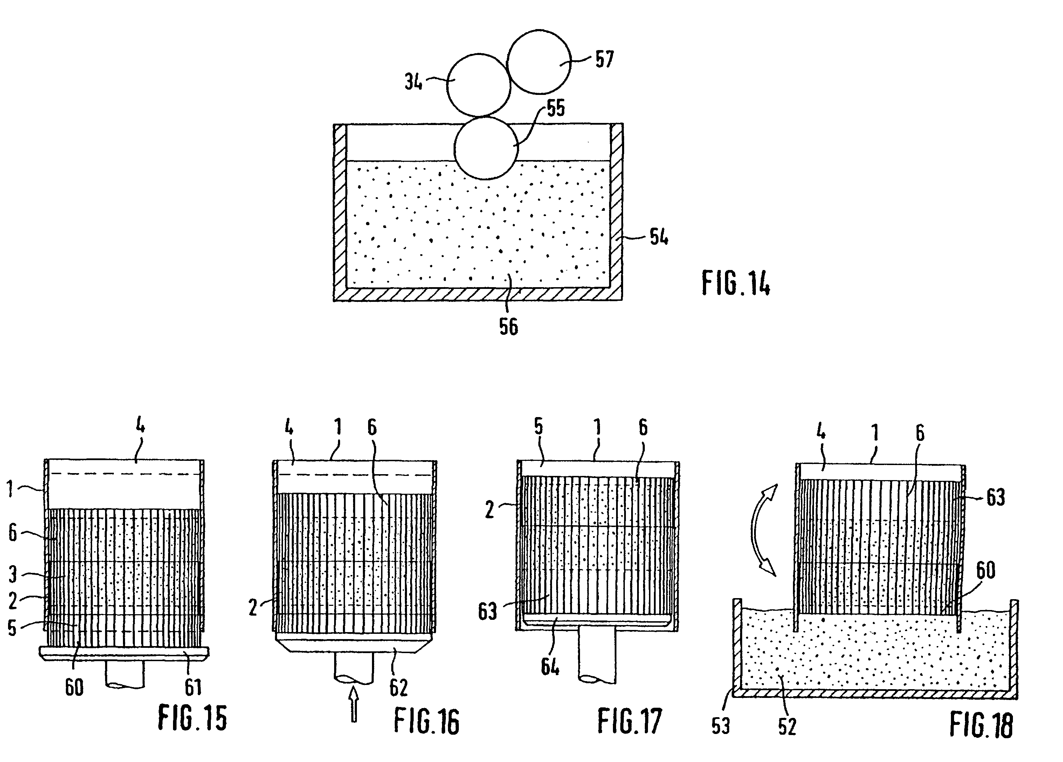

Figur 14 zeigt eine Auftragstation, durch die ein Haftmittel 56, welches aus einem Haftmittelbehälter 54 mittels einer Auftragwalze 55 auf eine Walze 34 aufgetragen wird.

Die Auftragwalze 55 ist im wesentlichen horizontal ausgebildet. Sie ist drehbar gelagert. Sie ragt teilweise in das Haftmittel 56 hinein. Die Oberfläche der Auftragwalze 55 ist so ausgestaltet, daß diese das Haftmittel 56 aus dem Haftmittelbehälter 54 aufnimmt und auf die in Kontakt mit der Auftragwalze stehenden Walze 34 überträgt. Zum Abstreifen überschüssiger Haftmittelmenge ist eine Abstreifwalze 57 vorgesehen, die an der Walze 34 anliegt.

Figur 15 zeigt im Schnitt ein Mantelrohr 1. Das Mantelrohr 1 weist vorzugsweise einen im wesentlichen kreisförmigen Querschnitt auf. An den jeweiligen Endabschnitten des Mantelrohres 1 sind Verbindungsbereiche 4, 5 ausgebildet. Die Verbindungsbereiche 4, 5 sind durch die gestrichelten Linien gekennzeichnet. Diese Verbindungsbereiche 4, 5 sind zur Verbindung der Anordnung mit weiteren Komponenten, die nicht dargestellt sind, vorgesehen. Insbesondere kann ein jeder Verbindungsbereich 4, 5 mit einer Komponente eines Abgassystems einer Verbrennungskraftmaschine verbunden werden.

Der zwischen den Verbindungsbereichen 4, 5 liegende axiale Abschnitt des Mantelrohres 1 weist eine Länge auf, die im wesentlichen der axialen Erstreckung eines Wabenkörpers entspricht.

In dem Mantelrohr 1 ist eine Manschette 2 eingebracht. Die Manschette 2 weist einen Außenmantel auf, der im wesentlichen zur Anlage an einen Teil der Innenmantelfläche des Mantelrohres 1 kommt, wie dies insbesondere aus der Fig. 2 ersichtlich ist. Die Manschette 2 ist vorzugsweise in Umfangsrichtung betrachtet ringförmig ausgebildet. Wie aus der Darstellung nach Fig. 2 erstreckt sich die Manschette 2 über einen Teil der axialen Erstreckung des Mantelrohres 1.

Die Manschette 2 ist mit dem Mantelrohr 1 verbunden. Mit dem Bezugszeichen 3 ist ein Lotabschnitt bezeichnet, der teilweise das Mantelrohr 1 und das buchsenförmige Element 2 überlappt.

In das Mantelrohr 1 mit der Manschette 2 wird ein Wabenkörper 6 eingebracht. Der Wabenkörper 6 wird so in das Mantelrohr 1 eingebracht, daß ein Abschnitt 60 aus dem Mantelrohr 1 vorsteht, wie dies aus der Fig. 2 ersichtlich ist. Der Abschnitt 60 des Wabenkörpers 6 wird mit einem nicht dargestellten Haftmittel, insbesondere einer Haftflüssigkeit, in Kontakt gebracht. Die Haftflüssigkeit ist in einer Aufbringeinrichtung 61 bereitgestellt. Es erfolgt eine Benetzung des Wabenkörpers von der Stirnseite her in axialer Richtung des Wabenkörpers 6. Wie insbesondere aus der Fig. 2 ersichtlich ist, ist die Aufbringeinrichtung 61 so ausgestaltet, daß die zur Verfügung stehende Haftmittelfläche größer ist als die Querschnittsfläche des Wabenkörpers 6, so daß eine Benetzung mit einem Haftmittel über den gesamten Querschnitt des Wabenkörpers 6 möglich ist.

Erfolgte eine ausreichende Benetzung des Wabenkörpers mit einer Haftflüssigkeit, so wird der Wabenkörper 6 in das Mantelrohr 1 eingebracht. Die Einbringung des Wabenkörpers 6 erfolgt vorzugsweise mittels eines Stempels 62, durch den eine Kraft in axialer Richtung des Mantelrohres 1 auf den Wabenkörper 6 ausgeübt wird.

An dem Mantelrohr 1 greift ein entsprechender Gegenhalter an, der nicht dargestellt ist, und durch den das Mantelrohr 1 gehalten wird. Der Wabenkörper 6 wird soweit in das Mantelrohr 1 eingebracht, daß dieser zwischen den Verbindungsbereichen 4, 5 liegt, wie dies insbesondere aus der Fig. 2 ersichtlich ist.

Figur 17 zeigt, daß vor einem Einbringen eines Lotes ein dem Abschnitt 60 gegenüberliegender weiterer Abschnitt 63 des Wabenkörpers 6 mit einem Haftmittel in Kontakt gebracht wird. Das Haftmittel wird durch eine Aufbringeinrichtung 64 bereitgestellt. Wie aus der Figur 17 ersichtlich ist, ist der Querschnitt der Aufbringeinrichtung 64 etwas kleiner als der Querschnitt des Wabenkörpers 6, so daß die Aufbringeinrichtung 64 teilweise in das Mantelrohr 1 eingebracht wird.

Nachdem der weitere Abschnitt 63 mit dem Haftmittel versehen worden ist, wird ein Lotpulver 52 in den Wabenkörper 6 eingebracht. Der Einbringvorgang des Lotes in den Wabenkörper 6 erfolgt derart, daß der Wabenkörper stirnseitig in das Lotpulver eingedrückt wird. Anschließend wird der Wabenkörper mit dem Mantelrohr 1 gewendet und die gegenüberliegende Stirnfläche in das Lotpulver 51 eingedrückt. Das Lotpulver 52 ist in einem Behälter 53 bereitgestellt.

### Bezugszeichenliste

- 1: Mantelrohr
- 2: Manschette
- 3,3a,3b: Lotabschnitt
- 4,5: Verbindungsbereich
- 6: Wabenkörper
- 7: Blechlage
- 8: Kanal
- 9: Außenmantel
- 10: Innenwandung
- 11,12: Öffnung
- 13: Spalt
- 14: Haftmittel
- 15,16: Stirnfläche
- 17: Druckeinheit
- 18: Körper
- 19: Kanal
- 20: Zentralkanal
- 21: Nut
- 22: Dichtung
- 23: Ringspalt
- 31: Mantelrohr
- 32: Wabenkörper
- 33: Längsachse
- 34: Walze
- 35: Walzenachse
- 36: Kern
- 37: Substrat
- 38: Walze
- 39: Walze
- 40: Endbereich
- 41: Kontur
- 42: Kanal
- 43: Stirnfläche
- 44: Stirnfläche
- 47: Manschette
- 50: Abschnitt
- 51: Stempel
- 52: Lotpulver
- 53: Behälter
- 54: Haftmittelbehälter
- 55: Auftragwalze
- 56: Haftmittel
- 57: Abstreifwalze
- 60: Abschnitt
- 61: Aufbringeinrichtung
- 62: Stempel
- 63: Aufbringeinrichtung

## Patentansprüche

1. Verfahren zum Herstellen eines ummantelten Wabenkörpers, insbesondere eines Katalysatorträgerkörpers mit folgenden Schritten:
a) Ausbilden eines Wabenkörpers (6,32) durch Stapeln und/oder Wickeln von Blechlagen (7), von denen zumindest ein Teil strukturierte Blechlagen sind, so daß der Wabenkörper für ein Fluid durchströmbare Kanäle (8, 42) aufweist;
b) Einbringen einer Manschette (2) in ein Mantelrohr (1, 31), wobei die Manschette (2) eine axiale Erstreckung aufweist, die kleiner ist als die axiale Länge des Wabenkörpers (6, 32) und des Mantelrohres (1, 31) und einen Außenmantel (9) aufweist, der im wesentlichen zur Anlage an einen Teil der Innenwandung (10) des Mantelrohres (1, 31) kommt;
c) Einbringen des Wabenkörpers (6, 32) in das Mantelrohr (1, 31) und in die Manschette (2);
d) Ausbilden einer Verbindung zwischen dem Wabenkörper (6, 32) und dem Mantelrohr (1, 31) in einem Lotabschnitt (3b) sowie einer Verbindung zwischen dem Wabenkörper (6, 32) und der Manschette in einem Abschnitt (3a).

2. Verfahren nach Anspruch 1, bei dem die Manschette (2) gegen die Innenwandung (10) des Mantelrohres (1, 31) gepreßt wird.

3. Verfahren nach Anspruch 2, bei dem die Manschette (2) mittels einer mechanischen Presseinheit gegen die Innenwandung (10) gepreßt wird.

4. Verfahren nach Anspruch 3, bei dem die Manschette (2) durch einen Dorn der Presseinheit gegen die Innenwandung (10) gepreßt wird.

5. Verfahren nach Anspruch 3 oder 4, bei dem die Manschette (2) durch wenigstens zwei Segmentet, die radial beweglich sind, der Presseinheit gegen die Innenwandung (10) gepreßt wird.

6. Verfahren nach Anspruch 2, bei dem eine Druckeinheit (17) in das Mantelrohr (1, 31) eingebracht wird, durch die ein Druckmedium im wesentlichen radialauswärts gegen die Manschette (2) gerichtet wird, so daß die Manschette (2) gegen die Innenwandung (10) gepreßt wird.

7. Verfahren nach Anspruch 6, bei dem zwei umlaufende Dichtungen (22), deren Abstand zueinander höchstens einer Breite der Manschettes (2) entspricht, zur Anlage an die Manschette (2) gebracht werden, wobei wenigstens eine Austrittsöffnung für das Druckmedium zwischen den Dichtungen (22) vorgesehen ist.

8. Verfahren nach Anspruch 6 oder 7, bei dem ein Gas, insbesondere Luft, in das Mantelrohr (1) eingebracht wird.

9. Verfahren nach Anspruch 6 oder 7, bei dem eine Flüssigkeit, insbesondere Wasser, in das Mantelrohr (1) eingebracht wird.

10. Verfahren nach einem der Ansprüche 1 bis 9, bei dem die Manschette (2) mit dem Mantelrohr (1, 31) verbunden wird.

11. Verfahren nach Anspruch 10, bei dem die Manschette (2) mit dem Mantelrohr (1, 31) stofflich verbunden wird.

12. Verfahren nach Anspruch 11, bei dem der die Manschette (2) mit dem Mantelrohr (1, 31) verschweißt wird.

13. Verfahren nach Anspruch 10, bei dem die Manschette (2) mit dem Mantelrohr (1, 31) verklebt wird.

14. Verfahren nach Anspruch 10, bei dem die Manschette (2) mit dem Mantelrohr (1, 31) verlötet wird.

15. Verfahren nach Anspruch 14, bei dem die Manschette (2) mit dem Mantelrohr (1, 31) hartgelötet wird.

16. Verfahren nach einem der Ansprüche 1 bis 15, bei dem der Wabenkörper (32) stirnseitig mit einer ein Haftmittel enthaltenden Walze (34, 38, 39), die um eine Walzenachse (35) drehbar ist, in Kontakt gebracht und eine relativ Bewegung zwischen dem Wabenkörper (32) und der Walze (34, 38, 39) ausgeführt und dann wenigstens in den Wabenkörper (32) ein Lot (52) eingebracht wird.

17. Verfahren nach Anspruch 16, bei dem der Wabenkörper (32) ortsfest positioniert und die Walze (34, 38, 39) bewegt wird.

18. Verfahren nach Anspruch 16, bei dem die Walze (34, 38, 39) ortsfest positioniert und der Wabenkörper (32) bewegt wird.

19. Verfahren nach Anspruch 16, bei dem der Wabenkörper (32) wenigstens einen aus dem Mantelrohr (1) vorstehenden bezüglich einer Längsachse (33) des Wabenkörpers (32) rotationssymmetrisch ausgebildeten Endbereich (40) aufweist, wobei der Wabenkörper (32) um seine Längsachse (33) und die Walze (39), die eine an den Endbereich (40) angepaßte Gestalt aufweist und sich radialeinwärts bis zur Längsachse (33) erstreckt, um eine die Längsachse (33) unter einem Winkel von ca 90° schneidende Walzenachse (35) verdreht wird.

20. Verfahren nach einem der Ansprüche 16 bis 19, bei dem die Walze (34, 38, 39) lediglich bereichsweise das Haftmittel aufweist.

21. Verfahren nach einem der Ansprüche 16 bis 20, bei dem der Wabenkörper (32) im wesentlichen vertikal angeordnet und die Walze (34, 38, 39) mit einer oberen Stirnfläche (43) des Wabenkörpers (32) in Kontakt gebracht wird.

22. Verfahren nach einem der Ansprüche 16 bis 20, bei dem der Wabenkörper (32) im wesentlichen vertikal angeordnet und die Walze (34, 38, 39) mit einer unteren Stirnfläche (44) des Wabenkörpers (32) in Kontakt gebracht wird.

23. Verfahren einem der Ansprüche 16 bis 20, bei dem der Wabenkörper (32) zwei gegenüberliegenden Stirnflächen (43, 44) aufweist und der Wabenkörper (32) zwischen zwei beabstandeten, drehbar gelagerten Walzen (34, 38) hindurch geführt wird, so daß die beiden Stirnflächen (43, 44) im wesentlichen gleichzeitig mit einem Haftmittel wenigstens benetzt werden.

24. Verfahren nach einem der Ansprüche 1 bis 23, bei dem der Wabenkörper (32) teilweise in das Mantelrohr (31) eingebracht und der aus dem Mantelrohr (31) vorstehende Abschnitt (50, 60) des Wabenkörpers mit seiner Stirnfläche (43) mit einem Haftmittel in Kontakt gebracht und danach der Wabenkörper (32) in das Mantelrohr (31) eingebracht wird, wobei danach ein Einringen eines Lotes (52) wenigstens in den Wabenkörper (32) erfolgt.

25. Verfahren nach Anspruch 24, bei dem vor dem Einbringen des Lotes (52) ein dem Abschnitt (50, 60) gegenüberliegender weiterer Abschnitt des Wabenkörpers (32) mit einem Haftmittel in Kontakt gebracht wird.

26. Verfahren nach Anspruch 25, bei dem der Wabenkörper (32) durch das Mantelrohr (31) hindurch geschoben wird, so daß der weitere Abschnitt aus dem Mantelrohr (31) vorsteht.

27. Verfahren nach Anspruch 24, 25 oder 26, bei dem während einer der Abschnitte (50, 60) mit dem Haftmittel in Kontakt gebracht wird, der Wabenkörper (32) so in dem Mantelrohr (31) angeordnet ist, daß dieser sich über einen wesentlichen Teil seiner axialen Länge im Mantelrohr (31) befindet.

28. Verfahren nach Anspruch 27, bei dem der Wabenkörper (32) so in das Mantelrohr (31) eingebracht wird, daß dieser wenigstens 1 mm, vorzugsweise 5 mm, aus dem Mantelrohr (31) vorsteht.

29. Verfahren nach einem der Ansprüche 24 bis 28, bei dem der Abschnitt (60) mit einer Aufbringeinrichtung (61), die das Haftmittel enthält, in Kontakt gebracht wird, wobei die Aufbringeinrichtung (61) eine Benetzungsfläche aufweist, die größer als eine Stirnfläche des Abschnittes (60) ist und diese vollständig überlappt.

30. Verfahren nach einem der Ansprüche 24 bis 29, bei dem die Anordnung im wesentlichen so vertikal positioniert wird, daß der vorstehende Abschnitt (60) mit einer oberhalb des Mantelrohres (1) angeordneten Aufbringeinrichtung (61), die ein Haftmittel enthält, in Kontakt gebracht wird.

31. Verfahren nach einem der Ansprüche 24 bis 30, bei dem wenigstens der Abschnitt (60) gegen einen im wesentlichen elastischen Haftmittelträger gedrückt wird.

32. Verfahren nach einem der Ansprüche 24 bis 31, bei dem die Anordnung und/oder der Haftmittelträger so positioniert werden, daß sich Kontaktflächen, die während eines Kontaktes eines Abschnittes (60) mit dem Haftmittelträger oder dem Haftmittel entstehen, bei wenigstens zwei aufeinanderfolgenden Anordnungen nur teilweise überlappen.

33. Verfahren nach einem der Ansprüche 1 bis 32, bei dem wenigstens ein Lotabschnitt (3) ausgebildet wird, der das Mantelrohr (1) und die Manschette (2) überlappt.

34. Verfahren nach einem der Ansprüche 1 bis 33, bei dem die Ausbildung der Verbindung zwischen dem Wabenkörper (2) und dem Mantelrohr (1) und der Manschette (2) sowie die Ausbildung der Verbindung zwischen dem Mantelrohr (1) und der Manschette (2) im wesentlichen gleichzeitig erfolgt.

## Claims

1. A process for producing an encased honeycomb body, in particular a catalyst carrier body, comprising the following steps:
a) forming a honeycomb body (6, 32) by stacking and/or winding sheet metal layers (7) of which at least a part are structured sheet metal layers so that the honeycomb body has passages (8, 42) through which a fluid can flow;
b) introducing a sleeve (2) into a tubular casing (1, 31), the sleeve (2) being of an axial extent which is less than the axial length of the honeycomb body (6, 32) and the tubular casing (1, 31) and having an outer peripheral surface (9) which comes to bear substantially against a part of the inner wall (10) of the tubular casing (1, 31);
c) introducing the honeycomb body (6, 32) into the tubular casing (1, 31) and into the sleeve (2); and
d) forming a direct connection between the honeycomb body (6, 32) and the tubular casing (1, 31) and a direct connection between the honeycomb body (6, 32) and the sleeve.

2. A process according to claim 1 in which the sleeve (2) is pressed against the inner wall (10) of the tubular casing (1, 31).

3. A process according to claim 2 in which the sleeve (2) is pressed against the inner wall (10) by means of a mechanical pressing unit.

4. A process according to claim 3 in which the sleeve (2) is pressed against the inner wall (10) by a bar of the pressing unit.

5. A process according to claim 3 or claim 4 in which the sleeve (2) is pressed against the inner wall (10) by at least two radially movable segments of the pressing unit.

6. A process according to claim 2 in which a pressure unit (17) is introduced into the tubular casing (1, 31), by means of which pressure unit a pressure medium is directed substantially radially outwardly against the sleeve (2) so that the sleeve (2) is pressed against the inner wall (10).

7. A process according to claim 6 in which two peripherally extending seals (22) whose mutual spacing corresponds at most to a width of the sleeve (2) are caused to bear against the sleeve (2), wherein there is provided at least one outlet opening for the pressure medium between the seals (22).

8. A process according to claim 6 or claim 7 in which a gas, in particular air, is introduced into the tubular casing (1).

9. A process according to claim 6 or claim 7 in which a liquid, in particular water, is introduced into the tubular casing (1).

10. A process according to one of claims 1 to 9 in which the sleeve (2) is connected to the tubular casing (1, 31).

11. A process according to claim 10 in which the sleeve (2) is connected to the tubular casing (1, 31) in respect of the material involved.

12. A process according to claim 11 in which the sleeve (2) is welded to the tubular casing (1, 31).

13. A process according to claim 10 in which the sleeve (2) is stuck to the tubular casing (1, 31).

14. A process according to claim 10 in which the sleeve (2) is soldered to the tubular casing (1, 31).

15. A process according to claim 14 in which the sleeve (2) is hard-soldered to the tubular casing (1, 31).

16. A process according to one of claims 1 to 15 in which the honeycomb body (32) is brought into contact at its end with a roller (34, 38, 39) which contains an adhesive agent and which is rotatable about a roller axis (35), and a relative movement is effected between the honeycomb body (32) and the roller (34, 38, 39) and then a solder (52) is introduced at least into the honeycomb body (32).

17. A process according to claim 16 in which the honeycomb body (32) is positioned stationarily and the roller (34, 38, 39) is moved.

18. A process according to claim 16 in which the roller (34, 38, 39) is positioned stationarily and the honeycomb body (32) is moved.

19. A process according to claim 16 in which the honeycomb body (32) has at least one end region (40) which projects from the tubular casing (1) and which is of a rotationally symmetrical configuration with respect to a longitudinal axis (33) of the honeycomb body (32), wherein the honeycomb body (32) is rotated about its longitudinal axis (33) and the roller (39) which is of a configuration adapted to the end region (40) and which extends radially inwardly as far as the longitudinal axis (33) is rotated about a roller axis (35) which intersects the longitudinal axis (33) at an angle of about 90°.

20. A process according to one of claims 16 to 19 in which the roller (34, 38, 39) only has the adhesive agent in a region-wise manner.

21. A process according to one of claims 16 to 20 in which the honeycomb body (32) is arranged substantially vertically and the roller (34, 38, 39) is brought into contact with an upper end face (43) of the honeycomb body (32).

22. A process according to one of claims 16 to 20 in which the honeycomb body (32) is arranged substantially vertically and the roller (34, 38, 39) is brought into contact with a lower end face (44) of the honeycomb body (32).

23. A process according to one of claims 16 to 20 in which the honeycomb body (32) has two oppositely disposed end faces (43, 44) and the honeycomb body (32) is guided through between two spaced, rotatably supported rollers (34, 38) so that the two end faces (43, 44) are at least wetted substantially simultaneously with an adhesive agent.

24. A process according to one of claims 1 to 23 in which the honeycomb body (32) is partially introduced into the tubular casing (31) and the portion (50, 60) of the honeycomb body, which projects from the tubular casing (31), is brought into contact at its end face (43) with an adhesive agent and thereafter the honeycomb body (32) is introduced into the tubular casing (31), wherein a solder (52) is thereafter introduced at least into the honeycomb body (32).

25. A process according to claim 24 in which prior to the introduction of the solder (52) a further portion of the honeycomb body (32), which is in opposite relationship to the portion (50, 60), is brought into contact with an adhesive agent.

26. A process according to claim 25 in which the honeycomb body (32) is pushed through the tubular casing (31) so that the further portion projects from the tubular casing (31).

27. A process according to claim 24, claim 25 or claim 26 in which while one of the portions (50, 60) is brought into contact with the adhesive agent the honeycomb body (32) is so arranged in the tubular casing (31) that it is disposed over a substantial part of its axial length in the tubular casing (31).

28. A process according to claim 27 in which the honeycomb body (32) is so introduced into the tubular casing (31) that it projects at least 1 mm and preferably 5 mm from the tubular casing (31).

29. A process according to one of claims 24 to 28 in which the portion (60) is brought into contact with an applicator device (61) which contains the adhesive agent, the applicator device (61) having a wetting surface which is larger than an end face of the portion (60) and completely overlaps same.

30. A process according to one of claims 24 to 29 in which the arrangement is substantially so vertically positioned that the projecting portion (60) is brought into contact with an applicator device (61) which is arranged above the tubular casing (1) and which contains an adhesive agent.

31. A process according to one of claims 24 to 30 in which at least the portion (60) is pressed against a substantially elastic adhesive agent carrier.

32. A process according to one of claims 24 to 31 in which the arrangement and/or the adhesive agent carrier are so positioned that contact faces which occur during contact of a portion (60) with the adhesive agent carrier or the adhesive agent only partially overlap in at least two successive arrangements.

33. A process according to one of claims 1 to 32 in which there is formed at least one solder portion (3) which overlaps the tubular casing (1) and the sleeve (2).

34. A process according to one of claims 1 to 33 in which the formation of the connection between the honeycomb body (2) and the tubular casing (1) and the sleeve (2) and the formation of the connection between the tubular casing (1) and the sleeve (2) are effected substantially simultaneously.

## Revendications

1. Procédé de fabrication d'un corps en nid d'abeilles doté d'une enveloppe, en particulier corps de support de catalyseur, selon les étapes suivantes :
a) formation d'un corps en nid d'abeilles (6, 32) par stratification et/ou enroulement de feuilles de tôle (7) au moins partiellement structurées de manière à ce que le corps en nid d'abeilles comporte des canaux susceptibles d'être parcourus par un fluide ;
b) introduction d'un manchon (2) dans un tube d'enveloppe (1, 31), le manchon (2) présentant une extension axiale qui est plus petite que la longueur axiale du corps en nid d'abeilles (6, 32) et du tube d'enveloppe (9), et qui présente une enveloppe extérieure (9) ;
c) introduction du corps en nid d'abeilles (6, 32) dans le tube d'enveloppe (1, 31) et le manchon (2) ;
d) formation d'une liaison directe entre le corps en nid d'abeilles (6, 32) et le tube d'enveloppe (1, 31) ainsi que la formation d'une liaison directe entre le corps en nid d'abeilles (6, 32) et le manchon.

2. Procédé selon la revendication 1, dans lequel le manchon (2) est pressé contre la paroi interne (10) du tube d'enveloppe (1, 31).

3. Procédé selon la revendication 2, dans lequel le manchon (2) est pressé contre la paroi interne (10) au moyen d'une unité-presse mécanique.

4. Procédé selon la revendication 3, dans lequel le manchon (2) est pressé contre la paroi interne (10) au moyen d'un poinçon de l'unité-presse.

5. Procédé selon la revendication 3 ou 4, dans lequel le manchon (2) est pressé contre la paroi interne (10) par au moins deux segments de l'unité-presse déplaçables de manière radiale.

6. Procédé selon la revendication 2, dans lequel une unité de pression (17) est introduite dans le tube d'enveloppe (1, 31) qui permet à un moyen de pression d'être orienté essentiellement vers l'extérieur de manière radiale contre le manchon (2) de sorte que le manchon (2) soit pressé contre la paroi interne (10).

7. Procédé selon la revendication 6, dans lequel deux joints d'étanchéité (22) circonférentiels, dont la distance relative correspond au plus à une largeur du manchon (2), s'appliquent sur le manchon (2), où au moins une ouverture de sortie entre les joints d'étanchéité est prévue pour le moyen de pression.

8. Procédé selon la revendication 6 ou 7, dans lequel un gaz , notamment de l'air, est introduit dans le tube d'enveloppe (1).

9. Procédé selon la revendication 6 ou 7, dans lequel un liquide, notamment de l'eau est introduit dans le tube d'enveloppe (1).

10. Procédé selon l'une des revendications 1 à 9, dans lequel le manchon (2) est relié au tube d'enveloppe (1, 31).

11. Procédé selon la revendication 10, dans lequel le manchon (2) est relié monobloc au tube d'enveloppe (1, 31).

12. Procédé selon la revendication 11, dans lequel le manchon (2) est soudé avec le tube d'enveloppe (1, 31).

13. Procédé selon la revendication 10, dans lequel le manchon (2) est collé au tube d'enveloppe (1, 31).

14. Procédé selon la revendication 10, dans lequel le manchon (2) est brasé avec le tube d'enveloppe (1, 31).

15. Procédé selon la revendication 14, dans lequel le manchon (2) est lié au moyen d'un brasage fort avec le tube d'enveloppe (1, 31).

16. Procédé selon l'une des revendications 1 à 15, dans lequel le corps en nid d'abeilles est appliqué du côté frontal sur un cylindre (34, 38, 39) contenant un moyen d'adhésion et lequel cylindre est susceptible de tourner autour d'un axe de cylindre (35), et procédé dans lequel est effectué un mouvement relatif entre le corps en nid d'abeilles (32) et le cylindre (34, 38, 39), puis ensuite est introduit un matériau de brasure (52) au moins dans le corps en nid d'abeilles (32).

17. Procédé selon la revendication 16, dans lequel le corps en nid d'abeilles (32) est positionné de manière fixe et le cylindre (34, 38, 39) est déplacé.

18. Procédé selon la revendication 16, dans lequel le cylindre (34, 38, 39) est positionné de manière fixe et le nid d'abeilles (32) est déplacé.

19. Procédé selon la revendication 19, dans lequel le corps en nid d'abeilles (32) comporte au moins une zone d'extrémité (40) faisant saillie hors du tube d'enveloppe (1) et est formé axialement symétrique par rapport à un axe longitudinal (33) du corps en nid d'abeilles (32) où le corps en nid d'abeilles est tourné autour de son axe longitudinal (33) et du cylindre (39) et d'un axe de cylindre (35) coupant l'axe longitudinal (33) sous un angle d'à peu près 90°, lequel cylindre (39) présente une forme adaptée à la zone d'extrémité et s'étend radialement vers l'intérieur jusqu'à l'axe longitudinal (33) en tournant.

20. Procédé selon l'une des revendications 16 à 19, dans lequel le cylindre (34, 38, 39) présente seulement en partie le moyen d'adhésion.

21. Procédé selon l'une des revendications 16 à 20, dans lequel le corps en nid d'abeilles (32) est en position essentiellement verticale et dans lequel le cylindre (34, 38, 39) est appliqué sur une surface frontale supérieure (43) du corps en nid d'abeilles (32).

22. Procédé selon l'une des revendications 16 à 20, dans lequel le corps en nid d'abeilles (32) est en position essentiellement verticale et dans lequel le cylindre (34, 38, 39) est appliqué sur une surface frontale inférieure (44) du corps en nid d'abeilles (32).

23. Procédé selon l'une des revendications 16 à 20, dans lequel le corps en nid d'abeilles (32) comporte deux surfaces frontales (43, 44) qui se font face, et dans lequel le corps en nid d'abeilles (32) est guidé entre deux cylindres (34, 38) éloignés l'un de l'autre et logés de façon rotative, de manière à ce que les deux surfaces frontales (43, 44) soient essentiellement en même temps au moins mouillés avec un moyen d'adhésion.

24. "Procédé selon l'une des revendications 1 à 23, dans lequel le corps en nid d'abeilles (32) est introduit partiellement dans le tube d'enveloppe (31) et dans lequel la partie (50, 60) faisant saillie hors du tube d'enveloppe (31) du corps en nid d'abeilles est mise en contact par sa surface frontale (43) avec un moyen d'adhésion, et dans lequel le corps en nid d'abeilles (32) est introduit ensuite dans le tube d'enveloppe (31), où ensuite un matériau de brasage (52) est introduit au moins dans le corps en nid d'abeilles (32).

25. Procédé selon la revendication 24, dans lequel, avant l'introduction du matériau de brasage (52), une partie (50, 60) faisant face à une autre partie du corps en nid d'abeilles (32) est mise en contact avec un moyen d'adhésion.

26. Procédé selon la revendication 25, dans lequel le corps en nid d'abeilles est poussé au travers du tube d'enveloppe de sorte que l'autre partie fasse saillie hors du tube d'enveloppe (31).

27. Procédé selon les revendications 24, 25 ou 26 dans lequel pendant qu'une des parties (50, 60) est mise en contact avec le moyen d'adhésion, le corps en nid d'abeilles (32) est disposé dans le tube d'enveloppe (31) de sorte que le corps en nid d'abeilles se trouve sur une partie substantielle de sa longueur axiale dans le tube d'enveloppe (31).

28. Procédé selon la revendication 27, dans lequel le corps en nid d'abeilles (32) est introduit dans le tube d'enveloppe (31) de manière que celui-ci fasse saillie d'au moins 1 mm, de préférence 5 mm, hors du tube d'enveloppe (31).

29. Procédé selon l'une des revendications 24 à 28, dans lequel la partie (60) est mise en contact avec un dispositif d'application (61) contenant le moyen d'adhésion, pendant que le dispositif d'application (61) présente une surface d'humectation qui est plus grande qu'une surface frontale de la partie (60) et recouvre complètement celle-ci.

30. Procédé selon l'une des revendications 24 à 29, dans lequel la disposition est prévue essentiellement verticalement de sorte que la partie (60) faisant saillie soit mise en contact avec un dispositif d'application, contenant un moyen d'adhésion, disposé au dessus du tube d'enveloppe (1)

31. Procédé selon l'une des revendications 24 à 30, dans lequel au moins la partie (60) est pressée contre un support de moyen d'adhésion essentiellement élastique.

32. Procédé selon l'une des revendications 24 à 31, dans lequel la disposition et/ou le support de moyen d'adhésion sont positionnés de sorte que des surfaces de contact qui se créent pendant un contact d'une partie (60) avec le support de moyen d'adhésion ou le moyen d'adhésion ne se recouvrent que partiellement dans au moins deux dispositions consécutives.

33. Procédé selon l'une des revendications 1 à 32, dans lequel il est formé au moins un tronçon de matériau de brasure (3) qui recouvre le tube d'enveloppe (1) et le manchon (2).

34. Procédé selon l'une des revendications 1 à 33, dans lequel la formation de la liaison entre le corps en nid d'abeilles (32) et le tube d'enveloppe (1) et le manchon (2) ainsi que la formation de la liaison entre le tube d'enveloppe (1) et le manchon (2) ont lieu essentiellement en même temps.
